# EUROPEAN PATENT APPLICATION

(11) **EP 0 710 866 A1**
(43) Date of publication of application: **08.05.1996**
(21) Application number: 95306631.3
(22) Date of filing: 20.09.1995
(51) Int. Cl.: G02B 27/01

(54) **Projection unit for automotive head up display**

(30) Priority: 14.10.1994 GB 9420758
(71) Applicant: PILKINGTON PLC, St. Helens, Merseyside WA10 3TT (GB)
(72) Inventor: Evans, Robert William, Ormskirk, Lancashire L40 5SY (GB)
(74) Representative: Lee, Michael John

(57) **Abstract**

A projection unit for an automotive head up display is provided which comprises a housing (43), a display source (40) mounted in the housing, a semi-reflecting plate (42) and a curved mirror (44). The semi-reflecting plate (42) conveys light from the display source (40) to the curved mirror which reflects light back towards the semi-reflecting plate and further towards a desired location.

## Description

This invention relates to improvements in or relating to automotive head up displays and more particularly to projection units for such displays.

Head up displays for use in automotive vehicles are well known and typically comprise a projection unit comprising a display source and focussing optics, and a combiner, usually the windscreen of the car. The display is focussed through the focussing optics and reflects off the combiner towards the driver.

Projection units for car head up displays are usually mounted in the dashboard of a car. As the available space is limited, the projection unit must itself be relatively small and have a relatively simple and compact arrangement. One problem associated with some such arrangements is that the effective eyebox (i.e. the amount of head movement allowed before the image is no longer seen) and field of view presented to the car driver are very limited in size.

Car head up displays having a relatively large eyebox and a wide field of view have been proposed which utilize lenses or mirrors. A refractive lens system requires several lens elements made from high quality optical glass all with two surfaces polished to high precision to achieve a good quality image. The cost of such focussing optics is unacceptably high for a car head up display. Moulded plastic lenses may replace some of the glass lenses, but due to the limited range of optical quality materials there is little scope for using exclusively plastic lenses. Furthermore the high coefficient of expansion of suitable plastic materials is likely to lead to unacceptable degradation of image quality over the wide range of temperatures likely to be encountered in the dashboard area of a motor vehicle.

As an alternative to using lenses in the projection unit mirrors can be used. Mirrors are more appropriate than lenses in this use as mirrors may be completely free of chromatic aberration and their surfaces are less steeply curved than a lens surface of the same focal length by a factor of about 4 and so generally introduce a lower level of image aberrations.

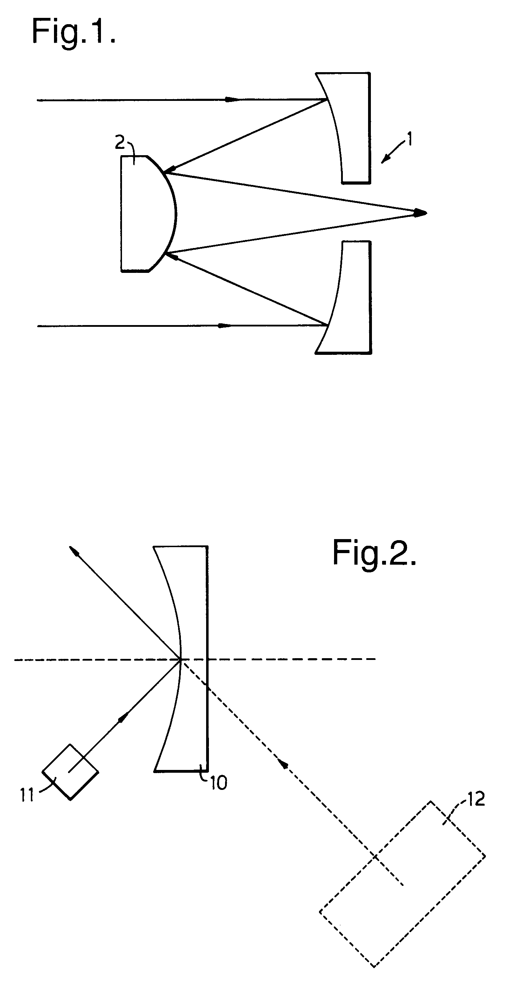

A fundamental restriction on the use of mirrors is the fact that they reflect light and so the object or display to be viewed in reflection from the mirror may obscure the reflected image. In order to overcome this problem several arrangements have been proposed. Figure 1 shows a focussing mirror 1 having a hole machined in its centre which is used to form an image in conjunction with a second mirror 2. This arrangement is not preferred for a visual display of a virtual image because of the torus shaped field of view and central obstruction. Figure 2 shows an alternative arrangement where a curved mirror 10 is tilted so that the object 11 and image 12 are both off axis. Provided that the offset angles are kept small then this arrangement can give good imagery. Preferably such an offset angle is less then 18°, ideally is less than 10° and may typically be about 6°. However such small offset angles restrict the head up display to having a relatively narrow eyebox and narrow field of view.

According to an aspect of the present invention there is provided a projection unit for an automotive head up display comprising a housing, a display source mounted in the housing, a semi-reflecting plate and a curved mirror which provides optical power to the projection unit, the arrangement being such that the semi-reflecting plate conveys light from the display source to the curved mirror which reflects the light back towards the semi-reflecting plate and further towards a desired location. Such a projection unit has a simple and compact arrangement and provides the head up display with a relatively large eyebox and wide field of view.

The invention has particular application where it is desirable for the image displayed to cover a wide field of view, for example vision enhancement. In some driving conditions, particularly fog, the visible light received by the driver cannot provide a clear picture of the view ahead. The driver's vision may be enhanced by means of an infra red camera and a visible display derived from the camera's view displayed in the driver's forward view by means of a head up display.

The curved mirror may be on axis or quasi axial with respect to the semi-reflecting plate. With such an arrangement the field of view, and/or eyebox, with good imagery is maximised.

The present invention further provides a head up display comprising a projection unit in accordance with the invention and a combiner which is arranged to direct light projected from the projection unit towards the eyes of an operator of the automotive vehicle in which the projection unit is located, to superimpose an image of the display on his forward view.

The combiner may have a reflection enhancing material associated with the combiner to enhance the luminance of the reflected image.

The semi-reflecting plate, curved mirror and optical combiner may be all holographic or all non-holographic. Indeed these elements could each be holographic or non-holographic in any combination.

The combiner may form part of a windscreen and the semi-reflecting plate and/or combiner can be shaped to at least partly compensate for the effects of the shape of the windscreen from which the image is seen in reflection. Indeed the projection unit may also further comprise an additional transmissive element which at least partly compensates for the effects of the shape of the windscreen from which the image is seen in reflection.

The semi-reflecting plate may be holographic and the curved mirror tilted quasi axially with respect to the holographic semi-reflecting plate. Such an arrangement increases the luminance of the light projected from the projection unit.

The projection unit may have a quarter wave plate or half wave plate positioned between the semi-reflecting plate and the curved mirror. Such an arrangement increases the luminance of the light projected from the projection unit. The projection unit may also include a plane polarizer located in the path of light projected from the projection unit. The plane polarizer in conjunction with the wave plate reduces the amount of unwanted stray light from above the vehicle and from the backlight of the vehicle which is reflected onto the projection unit by the windscreen.

An embodiment of the invention will now be described by way of example only with reference to the accompanying drawings in which:
- Fig 1: is a schematic representation of a known projection system
- Fig 2: is a schematic representation of a further known projection system
- Fig 3: is a schematic representation of an automotive head up display according to an embodiment of the present invention.
- Fig 4: is a schematic representation of a projection unit according to an embodiment of the present invention.
- Figs 5 and 6: show embodiments of the invention which reduce light loss at the semi reflecting plate
- Fig 7: is a schematic representation of a projection unit according to a further embodiment of the invention.

In the drawings like reference numerals indicate the same or similar parts.

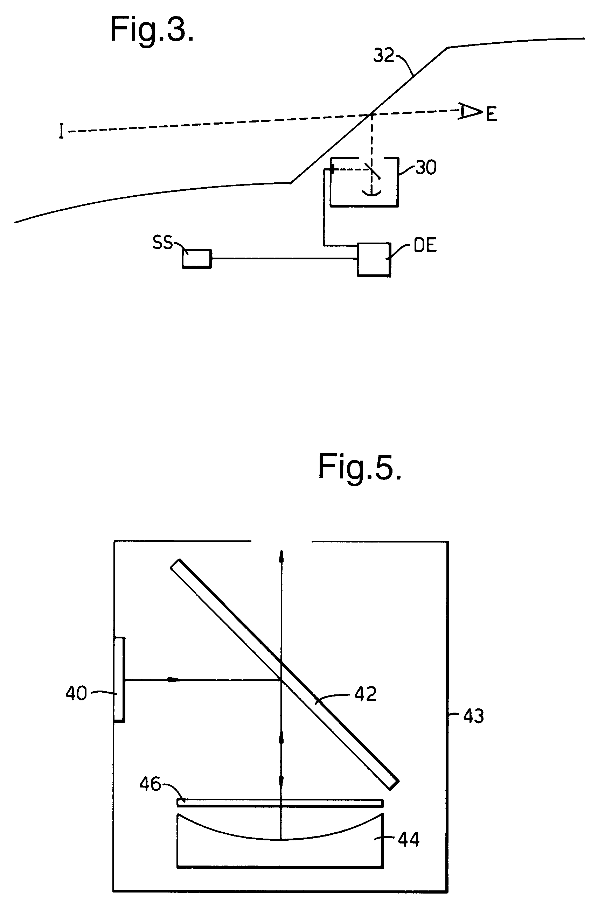

Referring to the drawings Figure 3 schematically shows an automotive head up display projection unit 30 which projects a light beam carrying visual information to be displayed to the driver of the vehicle upwardly towards an optical combiner, usually a portion of the automotive windscreen 32, from which it is reflected towards the driver's eyes E. Reflection from the windscreen 32 may be simply by the material of the windscreen, usually glass, or may be enhanced by a suitably coated reflective patch, or by a diffractive element, e.g. a hologram contained in a laminated windscreen. With a broad spectral bandwidth display, reflection from the windscreen material or from a wide spectral bandwidth or neutral reflective patch may be appropriate, but with a narrow spectral bandwidth display a diffractive element or wavelength selective reflective patch may be desirable.

By means of the reflected light the driver sees a virtual image I of the visual information superimposed on his forward view through the windscreen, the distance of the image I beyond the windscreen being dependent on the optical power of the projection unit 30. The displayed information may be in any suitable desired form, for example, a digital speed display. Figure 1 indicates a speed sensor SS and drive electronics DE connected with a display source in the projection unit 30.

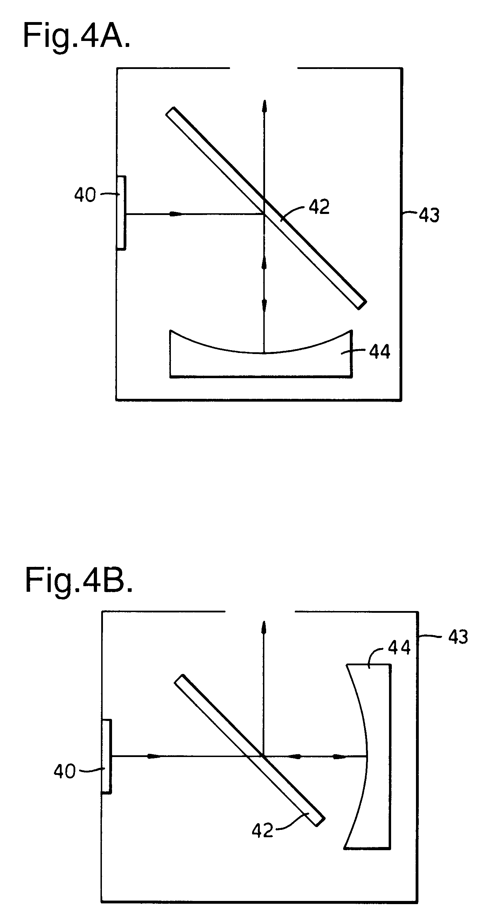

Figure 4 schematically shows a projection unit according to an embodiment of the present invention with alternative arrangements shown in figures 4A and 4B. In figure 4A visual information in the form of a light beam is directed from the display source 40 towards a semi-reflecting plate 42, each of which is located within housing 43. A portion of that light is transmitted through the semi-reflecting plate, the remainder of the light being reflected towards a curved mirror 44. The curved mirror reflects light back towards the semi-reflecting plate 42 where a portion of the light is transmitted through the semi-reflecting plate 42 towards an optical combiner such as an automotive windscreen. The curved mirror 44 is on axis or quasi axial with respect to the semi-reflecting plate 42. By "quasi axial" we mean that optical axis of the curved mirror 44 is at an angle of tilt of less than 18° with respect to the light path from the semi-reflecting plate 42 (i.e. a light ray reflected from the semi-reflecting plate 42 strikes the curved mirror 44 at an angle of incidence of less than 18° to the mirror axis, the ray reflected from the mirror 44 being twice that angle to the incident ray). Ideally the angle of tilt of the curved mirror 44 (i.e. the angle between its axis and the light path from the semi-reflecting plate) is less than 10° and typically may be about 6°. As the curved mirror 44 is used on axis or quasi axially, the field of view, or eyebox, with good imagery is maximized.

It is noted that use of a semi-reflecting plate will result in around 25% of the display luminance forming the observed image, as only 50% is reflected from the display to the mirror and then only 50% of this is transmitted to the windscreen and so to the driver. This loss of light has not been found to be a serious problem during use of the projection unit in daylight and at night. However the luminance of the observed image can be increased by suitable use of reflection enhancing coatings or holograms. Furthermore use of high luminance electronic displays will help increase the luminance of the observed image, such as an active matrix liquid crystal displays or a cathode ray tube.

It is also possible to reduce the light loss by using a holographic semi-reflecting plate with a curved mirror tilted slightly to be quasi axial with respect to the semi-reflecting plate so monochromatic light from the display is incident on the hologram at an angle within its high reflection band, but after reflection from the curved mirror is incident on the hologram outside its high reflection band and so is efficiently transmitted.

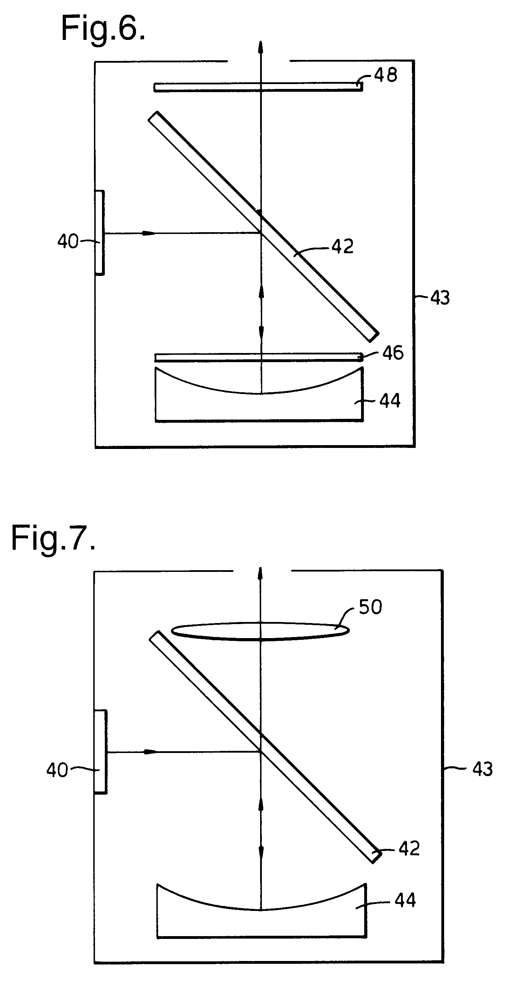

In another embodiment the light lost at the semi-reflecting plate may be reduced by using a polarizing, for example a holographic, semi-reflecting plate and making use of its property of reflecting light in one plane of polarization much more efficiently than light polarized in an orthogonal plane. Figure 5 shows such an embodiment. The plane of polarization of the efficiently reflected light is rotated by 90° by a double pass through a suitably oriented quarter wave plate or half wave plate 46 positioned between the semi-reflecting hologram 42 and the curved mirror 44. Consequently light is efficiently transmitted by the semi-reflecting hologram on its path to the windscreen and then the driver. This embodiment is particularly efficient if a plane polarized display source such as a liquid crystal display is used.

In a further embodiment of the invention as shown in Figure 6, it is possible to reduce the amount of unwanted light from above the car or transmitted through the backlight and reflected onto the projection unit by the windscreen. This light is then reflected back to the driver and can be seen superimposed on the head up display image. However the stray light can be eliminated using a plane polarizer on top of the projection unit so that the unwanted stray light is plane polarized, and a wave plate 48 (the same as wave plate 46 as described previously for use with a holographic semi-reflecting plate could be used) rotates the plane of polarization by 90° after a double pass so the stray light is virtually completely filtered out on the second pass through the plane polarizer. Stray light capture and reflection could also or alternatively be strongly attenuated by making the curved mirror a conformal hologram so only a narrow band of the spectrum is reflected.

The curved mirror is concave and may for example be spherical, aspheric, for example conic, although it may not necessarily be rotationally symmetric. The mirror is used to project a virtual image of the display to a windscreen where it is seen in reflection. The mirror may be shaped to at least partly compensate for the effects of the shape of the windscreen from which the image is seen in reflection.

The semi-reflecting plate, curved mirror and optical combiner may be all holographic or all non-holographic. In addition the semi-reflecting plate and combiner may be holographic and the focussing mirror non-holographic. The semi-reflecting plate may have flat parallel surfaces or have one or more surfaces spherical or aspheric or otherwise to at least partly compensate for the effects of the shape of the windscreen from which the image is seen in reflection.

In another embodiment of the invention as shown in figure 7 it is possible to use an additional transmissive optical element 50 to at least partly compensate for the effects of the shape of the windscreen curvature from which the image is seen in reflection. Such an element will have at least one surface spherical or aspheric, for example conic, although it may not necessarily be rotationally symmetric.

## Claims

1. A projection unit for an automotive head up display comprising a housing (43), a display source (40) mounted in the housing, a semi-reflecting plate (42) and a curved mirror (44) which provides optical power to the projection unit, the arrangement being such that the semi-reflecting plate (42) conveys light from the display source (40) to the curved mirror (44) which reflects light back towards the semi-reflecting plate (42) and further towards a desired location.

2. A projection unit as claimed in Claim 1 wherein the curved mirror (44) is on axis with respect to the semi-reflecting plate (42).

3. A projection unit as claimed in Claim 1 wherein the curved mirror (44) is quasi axial with respect to the semi-reflecting plate (42).

4. A projection unit as claimed in any preceding claim wherein the semi-reflecting plate (42) is holographic.

5. A projection unit as claimed in any preceding claim wherein the curved mirror (44) is holographic.

6. A projection unit as claimed in any preceding claim in combination with a combiner (32) which is arranged to direct light projected from the projection unit towards the eyes of an operator of the automotive vehicle in which the projection unit is located to superimpose an image of the display on his forward view.

7. A projection unit as claimed in any preceding claim wherein the curved mirror (44) is shaped to at least partly compensate for the effects of the shape of a combiner (32) from which the image is seen in reflection.

8. A projection unit as claimed in any preceding claim wherein the semi-reflecting plate (42) is shaped to at least partly compensate for the effects of the shape of a combiner (32) from which the image is seen in reflection.

9. A projection unit as claimed in any one of claims 6 to 8 wherein a reflection enhancing material is associated with the combiner (32) to enhance the luminance of the reflected image.

10. A projection unit as claimed in any one of claims 6 to 9 wherein the combiner (32) is holographic.

11. A projection unit as claimed in any one of claims 6 to 10 wherein the combiner (32) is part of a windscreen (32).

12. A projection unit as claimed in any preceding claim further comprising an additional transmissive element (50) to at least partly compensate for the effects of the shape of a windscreen (32) from which the image is seen in reflection.

13. A projection unit as claimed in any preceding claim wherein a quarter wave plate or half wave plate (46) is positioned between the semi-reflecting plate and the curved mirror.

14. A projection unit as claimed in claim 13 further comprising a plane polarizer (48) located in the path of light projected from the unit.

15. A projection unit substantially as hereinbefore described with reference to, and as illustrated in Figures 3 to 7.
